(19) **Europäisches Patentamt**

**European Patent Office** (11) Veröffentlichungsnummer: **0 044 380**

**Office européen des brevets** **B2**

(12) **NEUE EUROPÄISCHE PATENTSCHRIFT**

(45) Veröffentlichungstag der neuen Patentschrift: (51) Int. Cl.⁴: **F 16 C 3/02**
   **01.07.87**

(21) Anmeldenummer: **81103546.8**

(22) Anmeldetag: **09.05.81**

(54) **Antriebswelle aus faserverstärktem Kunststoff mit festgewickelten und verankerten Endstücken.**

(30) Priorität: **19.07.80 DE 3027432**

(43) Veröffentlichungstag der Anmeldung:
   **27.01.82 Patentblatt 82/4**

(45) Bekanntmachung des Hinweises auf die Patenterteilung:
   **21.03.84 Patentblatt 84/12**

(45) Bekanntmachung des Hinweises auf die Entscheidung
   über den Einspruch:
   **01.07.87 Patentblatt 87/27**

(84) Benannte Vertragsstaaten:
   **BE FR GB IT NL SE**

(56) Entgegenhaltungen:
   **EP-A-0 009 007**
   **DE-A-2 851 292**
   **DE-B-1 237 767**
   **GB-A-1 356 393**
   **GB-A-2 017 567**
   **GB-A-2 054 083**

(73) Patentinhaber: **Felten & Guilleaume**
   **Energietechnik GmbH, Schanzenstrasse 24,**
   **D-5000 Köln 80 (DE)**

(72) Erfinder: **Federmann, Helmut, Dr. rer. nat.,**
   **Holunderweg 17, D-5060 Bergisch- Gladbach 3 (DE)**
   Erfinder: **Bausch, Joachim, Dr.- Ing, Steeger Höhe**
   **16, D-5057 Dürscheid (DE)**

EP 0 044 380 B2

## Beschreibung

Antriebswelle aus faserverstärktern Kunststoff rnit festgewickelten und verankerten Endstücken

Die Erfindung bezieht sich auf eine Antriebswelle aus faserverstärktem Kunststoff gemäß dem Oberbegriff des Anspruchs 1. Sie findet besonders Anwendung bei Gelenkwellen für Motorfahrzeuge, wie Kardanwellen oder dergleichen.

Es ist schon aus der DE-A-28 51 293 eine Kardanwelle aus glasfaserverstärktem Kunststoff bekannt, bei der als Endstücke zylinderringförmige, vorgefertigte Buchsen aus Metall mit dem wesentlichen Teil ihrer Länge in den Endbereichen der Hohlwelle so festgesetzt sind, daß nur ein querschnittsgleicher Teil von ihnen vorragt. An diesem ist eine Verbindungseinrichtung, wie das Jochteil eines Kreuzgelenkes, befestigt. Gegenüber den üblichen Kardanwellen aus Stahl besitzt diese Wellenkonstruktion neben einem besseren Schwingungsverhalten den Vorteil eines geringeren Gewichtes.

Die Erfindung betrifft nun die Weiterbildung einer Antriebswelle, wie sie in der älteren EP-Anmeldung 80 105 211.9 (EP-A-0 029 093) vorgeschlagen wurde. Bei deren Rohr sind die in der Kunststoff-Matrix eingekapselten hochfesten Fasern oder Faserverbände in den innersten und den äußersten Lagen wendelförmig mit eng aufeinanderfolgenden Windungen möglichst geringer Steigung, hingegen in den Zwischenlagen mit einern Steigungswinkel zwischen 30° und 60° und einander gegenläufig kreuzenden Windungen der Fasern oder -Verbände aufeinanderfolgender Lagen angeordnet. Bei dieser Antriebswelle ist der vorragende Abschnitt jedes Endstückes als mit dem Hülsenfortsatz einstückiger Ringteil mit größerem Außendurchmesser jedoch gleicher lichter Weite wie dieser und mit etwa gleichem Außendurchmesser wie das Rohr ausgebildet, wobei an dessen innerer Stirnfläche die in der Kunststoff-Matrix eingekapselten Fasern oder -Verbände fest verhaftet sind, so daß jedes Ringteil zugleich als Begrenzung, endseitiger Abschluß und Schutz der empfindlichen Stirnflächen des Rohres vor äußeren Einflüssen dient.

Diese Ausbildung von Gelenkwellen, bei welcher der Hülsenfortsatz jedes Endstückes, bei gleichbleibender lichter Weite seiner Bohrung mit vom Ringteil gegen sein in das Innere des Hauptteiles ragendes Ende abnehmenden Querschnitts des Profiles seiner Oberfläche, und im Bereich des Überganges vom Hülsenfortsatz zum Ringteil dieser Endstücke mit einer umfänglichen Ringnut ausgebildet ist, hat sich in der Praxis vorzüglich bewährt. Es ergaben sich jedoch gewisse Schwierigkeiten beim Aufbringen der einander gegenläufig kreuzenden Windungen der Fasern oder -Verbände auf die Oberfläche der dort einzubindenden, in der beschriebenen Weise ausgestalteten Endstücke aus Metall. Beim kontinuierlichen Wickeln des das Wellenhauptteil bildenden Rohres ist nämlich eine Umkehrung der Wickelrichtung in diesen Endbereichen desselben erforderlich, wenn mit kontinuierlichen Fasern oder -Verbänden gewickelt werden soll, wie dies zur optimalen Festigkeit der Enden dieses Verbundrohrteiles und Vereinfachung des Wickelvorganges wünschenswert ist. Hierbei war jedoch bislang ein gegenseitiges Verschieben der Umkehrschleife jeder Faserwikklung beim Wickelvorgang kaum vermeidbar. Die so mehr zufällige Lage der Umkehrpunkte der Fasern oder -Verbände kann jedoch zu einer unerwünschten Faserstruktur an den Enden des Verbundrohres führen, welche die an sich optimale mechanische Festigkeit der Welle in diesen Bereichen zu beeinträchtigen vermag.

Der Erfindung liegt die Aufgabe zugrunde, bei einer solchen Antriebswelle die Verankerung und Einbindung der metallenen Endstücke in den Endabschnitten des Hauptteiles der Welle mit vorgegebener Faserstruktur desselben optimal zu gewährleisten. Diese Aufgabe wird durch die mit dem Anspruch 1 umrissene Erfindung gelöst.

Dabei ist das Teilmerkmal a) zum Teil aus der DE-A-1 237 767 bekannt. Dort wird ein Verfahren zur Herstellung von zylindrischen Rohren aus mit Kunstharz versehenem Glasfasermaterial mit stirnseitig angeordneten Innenflanschen beschrieben, bei dem über die beiden Flanschringe fortlaufend rechteckige Windungen aus Glasfasermaterial gewickelt werden, derart, daß die Windungen tangential die Flanschinnenkante berühren und im Mantelkörper parallel zueinander verlaufen. Dazu ist angegeben, daß zur Führung der Windungen Stifte, Einkerbungen oder ähnliche Führungselemente in Form eines Kranzes auf den Stirnflanschen angeordnet werden. Dieses mit Flanschen versehene Rohr ist jedoch vom Aufbau der Faserwindungen, der Ausbildung der Flansche und der Verbindung der Flansche her in keiner Weise als Antriebswelle, insbesondere nicht als Gelenkwelle für Motorfahrzeuge, geeignet.

Vorteilhafte Weiterbildungen der Aufgabenlösung sind mit den Unteransprüchen 2 und 3 angegeben, von welchen sich der Anspruch 2 auf die Anzahl der Verankerungsstifte bezieht, während der Anspruch 3 ein für die Drehmomentübertragung besonders günstiges Querschnittsprofil des Hülsenfortsatzes jedes der Endstücke angibt.

rZufolge der Anordnung der Verankerungsstifte im Bereich des als Ringnut ausgebildeten Überganges vorn Hülsenfortsatz jedes Endstückes zu dessen Ringteil ist die drehmomentenfeste Verankerung der Endstücke im Endbereich des Hauptteiles der Welle und zugleich die gewünschte Faserstruktur in dessen Endabschnitten mit absoluter Sicherheit gewährleistet, da jeder der Faserverbände oder Rovings beim Aufwickeln im endnahen Umkehrpunkt rutschfest fixiert ist, ehe die die Faserstruktur dauerhaft festlegende Härtung des Kunststoffes erfolgt. Hierbei legt sich zufolge der Schrägstellung der Verankerungsstifte jeder der aufgewickelten Faserverbände dicht an die Oberfläche des Endstückes und bewirkt so eine enge Verklammerung desselben in jedem der so festgewickelten Wellenhauptteil-Endabschnitte.

Die Verankerungsstifte sind an der inneren Stirn- oder Flankenfläche der im Bereich des Überganges vom Ringteil zum Hülsenfortsatz ausgebildeten Ringnut in die Endstücke eingesetzt, z. B. in Sackbohrungen eingesteckt bzw. in dort vorgesehene Gewindebohrungen eingedreht, und bilden somit lagebestimmende Umkehrpunkte für die kunststoffgetränkten Faserverbände bzw. Rovings. Wegen der Vielzahl dersalben ist eine möglichst große Anzahl von Verankerungsstiften erwünscht. Bei einem Bohrungsdurchmesser jedes der Endstücke zwischen 60 und 80 mm sind wenigstens 24, vorzugsweise 32 Verankerungsstifte vorgesehen, welche Anzahl der Stifte bei ausreichendem gegenseitigen Abstand zum Hindurchführen der aufzuwickelnden Fasern genügend Verankerungs-Umkehrpunkte ergibt. Hierbei wird ferner durch das nachstehend anhand der Zeichnung näher beschriebene Querschnittsprofil des Hülsenfortsatzes eine besonders gute kraft- und formschlüssige Einbindung des Hülsenfortsatzes jedes der Endstücke im betreffenden Endabschnitt des Wellen-Hauptteils gewährleistet.

Weitere Vorteile der Erfindung ergeben sich daraus, daß die Endstücke auf einen hochpräzisen Stahldorn aufgeschoben und mit vorgegebenem Abstand festgewickelt werden können, wobei der Durchmesser der Welle durch deren äußere Kontur nur geringfügig vergrößert wird. Aufgrund des präzisen Stahldornes besitzen diese Wellen enge Abmessungstoleranzen und somit nur sehr geringe Unwuchten, zu deren Ausgleich das Ringteil jedes der Endstücke mit einem hiervon auswärts vorragenden Zylinderabschnitt geringeren Durchmessers ausgebildet sein kann, zum Festspannen der Welle an einer Auswuchteinrichtung bzw. zur Aufnahme etwaige Unwuchten ausgleichender Gewichte.

Nachstehend ist die Erfindung anhand von in der Zeichnung veranschaulichten Ausführungsbeispielen näher erläutert. In der Zeichnung zeigen:

Figur 1 im Längsschnitt eine erfindungsgemäß ausgebildete Antriebswelle

Figur 2 in vergrößerter Darstellung einen Längsschnitt durch ein Wellenende, ohne Anschlußeinrichtung

Figur 3 eine andere Ausführungsform eines solchen Weilenendes

Figur 4 in Stirnansicht eines der metallenen Endstücke der Antriebswelle gemäß Fig. 3.

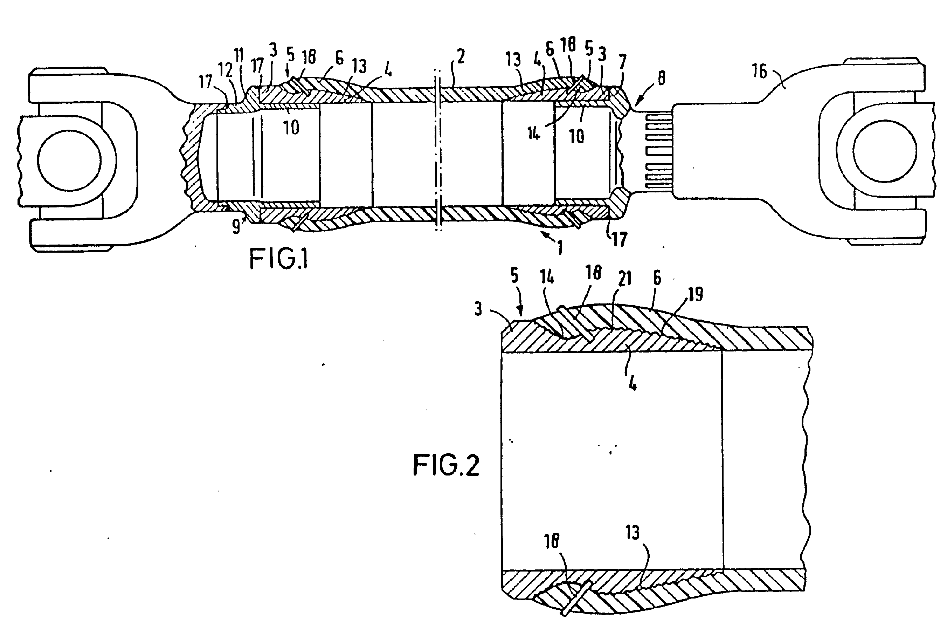

Die in Fig. 1 dargestellte Antriebswelle 1 weist einen rohrförmigen Hauptteil 2 sowie zwei in dessen beiden Endabschnitten verankert festgewickelte metallene Endstücke 5 mit einem Ringteil 3 und einem mit diesem einstückigen, von dem betroffenen Endabschnitt 6 des Hauptteiles 2 fest umschlossenen Hülsenfortsatzes 4 auf. In dem Übergangsbereich zwischen dem vom Endabschnitt 6 des Hauptteiles 2 der Welle 1 stirnseitig vorragenden, erweiterten Ringteil 3 und dem Hülsenfortsatz 4 ist eine Ringnut 14 ausgebildet, in welcher eine Anzahl von Verankerungsstiften 18 in gleichmäßiger Austellung, in gegen das Wellenende geneigter Schräglage, angeordnet sind. Diese dienen zur Bestimmung der Umkehrpunkte der zur Bildung des Hauptteiles 2 der Welle aufgewickelten mit härtbarem Kunststoff getränkten Fasern, Faserverbände oder Rovings sowie - nach Erhärtung des Kunststones - zur drehfesten Verankerung der metallenen Endstücke 5 in den Endabschnitten des Hauptteiles 2 der Antriebswelle 1.

An der äußeren Endfläche 7 des etwa auf Wellendurchmesser erweiterten Ringteiles 3 jedes der metallenen Endstücke 5 ist mittels einer umfänglichen Löt- oder Schweißnaht 17 eine Verbindungseinrichtung 8, z. B. Jochteil 16 eines Kreuzgelenkes, dauerhaft befestigt. Es kann jedoch gegebenenfalls zwischen der Verbindungseinrichtung 8 und dem Ringteil 3 auch ein Adapterteil 9 mit einem Zentrierabschnitt 10, einem Übergangsabschnitt 11 und einem Zylinderabschnitt 12 eingeschweißt sein, zur Anpassung an unterschiedliche Abmessungen der Verbindungseinrichtung 8 bzw. des betreffenden Antriebswellenendes. Ferner kann der Ringteil 3 jedes der Endstücke 5 mit einem hiervon endseitig vorragenden Zylinderabschnitt 20 geringeren Durchmessers ausgebildet sein, für den Unwuchtausgleich oder den unmittelbaren Anschluß beispielsweise eines Kupplungsteiles oder dergleichen.

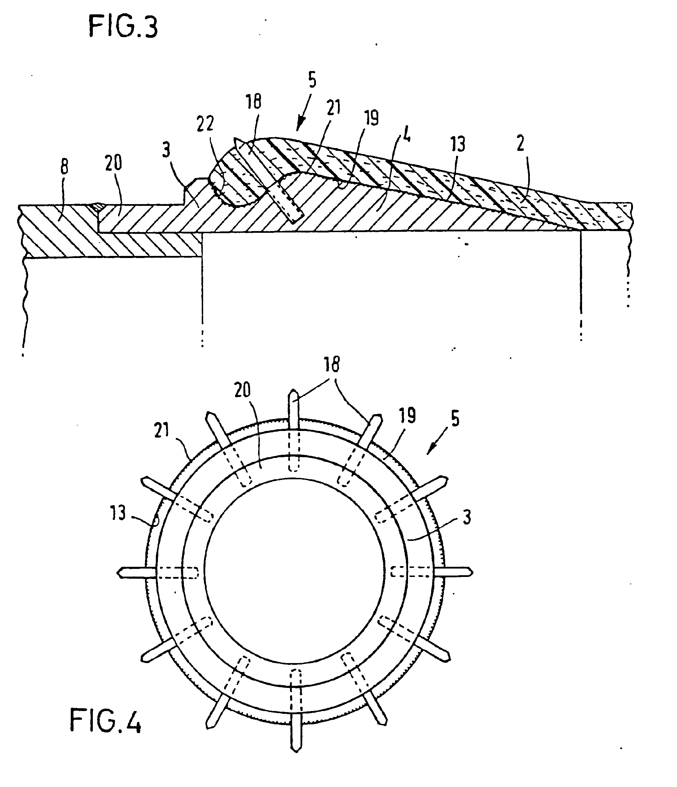

Wie in den Fig. 2 und 3 gezeigt, ist der Hülsenfortsatz 4 jedes der Endstücke 5 mit einem sich von einer etwa dem Durchmesser des Ringteiles 3 entsprechenden Ringwölbung 21 erweiternden und anschließend gegen das Welleninnere bis zu einem Nullwert verjüngenden Querschnittprofil 19 ausgebildet, wobei dessen gesamte Oberfläche sowie zumindest teilweise auch jene des Ringteiles 3, insbesondere dessen die Ringnut 14 begrenzende innere Stirn- oder Flankenfläche 22, mit einer Riefelung 13 oder dergleichen versehen ist.

Durch diese Ausbildung jedes der Endstücke 5 wird das Drehmoment ohne Spannungsspitzen kontinuierlich von dem aus faserverstärktem Kunststoff bestehenden rohrförmigen Wellenhauptteil 2 auf die metallenen Endstücke 5 geleitet, wobei die Riefelung 13 von deren Oberfläche die Rutschsicherheit der Faserverbände oder Rovings beim Ablegen erhöht und die Verklammerung zwischen den metallenen Endstücken 5 und dem aus faserverstärktem Kunststoff bestehenden rohrförmigen Wellenhauptteil 2 verbessert. Die so ausgebildete Antriebswelle 1 hat sich sowohl fertigungstechnisch als auch hinsichtlich ihrer mechanischen Festigkeit und Betriebssicherheit bei deren Einsatz als Antriebswelle, insbesondere Gelenkwelle, im Fahrzeugbau als besonders vorteilhaft erwiesen.

**Patentansprüche**

1. Antriebswelle, insbesondere Gelenkwelle für Motorfahrzeuge, mit einem Rohr (2) aus gehärtetem Kunststoff als Matrix von darin in mehreren besonders angeordneten Wickellagen eingekapselten hochfesten Fasern oder Faserverbänden und darin dauerhaft festgelegten Endstücken (5) aus Metall, mit je einem vom betreffenden Rohrendabschnitt umschlossenen Hülsenfortsatz (4) und einem hiervon vorragenden Abschnitt in Form eines mit dem gleichen Außendurchmesser und gleicher lichter Weite wie das Rohr und von diesem allein vorragenden Ringteiles (3), an dessen innerer Stirnfläche die in der Kunststoff-Matrix eingekapselten Fasern oder -Verbände fest verhaftet sind, so daß jedes Ringteil zugleich als Begrenzung und die empfindliche Stirnfläche des Rohres schützender endseitiger Abschluß der Kunststoff-Faserlagen dient, <u>dadurch gekennzeichnet</u>, daß

a) in umfänglich gleichmäßiger Verteilung an dem Hülsenfortsatz (4) jedes Endstückes (5) in Nähe des Überganges zu dessen Ringteil (3) eine Anzahl auswärts vorragender Verankerungsstifte (18) angeordnet sind,

b) die Verankerungsstifte (18) in gegen das Wellenende geneigter Schräglage angeordnet sind, und

c) die Verankerungsstifte (18) an der inneren Flankenfläche der im Bereich des Überganges vom Ringteil (3) zum Hülsenfortsatz (4) ausgebildeten Ringnut (14) in die Endstücke (5) ringesetzt, z. B. in Sackbohrungen eingesteckt bzw. Gewindebohrungen eingedreht, sind.

2. Antriebswelle nach Anspruch 1 dadurch gekennzeichnet, daß bei mit einem dem Wickeldorn entsprechenden Durchmesser ihrer Bohrung zwischen 60 und 80 mm vorgefertigten Endstücken (5) wenigstens vierundzwanzig, vorzugsweise zweiunddreißig Verankerungsstifte (18) vorgesehen sind,

3. Antriebswelle nach Anspruch 1 oder 2, dadurch gekennzeichnet, daß der Hülsenfortsatz (4) mit einem sich von einer etwa dem Durchmesser des Ringteiles (3) entsprechenden Ringwölbung (21) erweiternden und anschließend gegen das Welleninnere bis zu einem O-Wert verjüngenden Querschnittsprofil (19) ausgebildet, wobei dessen gesamte Oberfläche sowie zumindest teilweise auch jene des Ringteiles (3) gerieft ist.

**Claims**

1. A drive shaft, in particuler a universal joint shaft for motor vehicles, with a tube (2) of hardened plastics material as a matrix for high-strength fibres or fibre bindings embedded therein in a plurality of winding layers disposed in a particular manner, and with metal end pieces (5) which are permanently fixed in the tube and in each case have a sleeve extension (4), surrounded by the respective tube end section, and a section which projects from the sleeve extension (4) and is in the form of a collar part (3) which has the same outer diameter and the same inside width as the tube and alone projects therefrom and at the inner end face of which the fibres or fibre bindings embedded in the plastics material matrix are firmly retained such that each collar part acts simultaneously as a boundary and end closure, of the plastics material fibre layers, protecting the sensitive end face of the tube, characterized in that

a) a number of outwardly projecting anchoring pins (18) is arranged such that they are distributed uniformly on the periphery of the sleeve extension (4) of each end part (5) in the vicinity of the transition to the ring part (3) thereof;

b) the anchoring pins (18) are arranged in an oblique position inclined towards the end of the shaft, and

c) the anchoring pins (18) are inserted in the end pieces (5), e.g. inserted in blind-end bores or tapped into threaded bores, at the inner flank face of the annular groove (14) formed in the region of the transition from the ring part (3) to the sleeve extension (4).

2. A drive shaft as claimed in Claim 1, characterized in that in the case of end pieces (5) prefabricated such that their bores have a diameter between 60 and 80 mm, corresponding to the winding mandrel, at least twenty-four, preferably thirty-two, anchoring pins (18) are provided.

3. A drive shaft as claimed in Claim 1 or 2, characterized in that the sleeve extension (4) is formed with a cross-sectional profile (19) which widens from an annular curvature (21), corresponding approximately to the diameter of the ring part (3), and subseguently tapers to a zero value towards the interior of the shaft, the entire surface of the profile, as well as at least part of the surface of the ring part (3), being grooved.

**Revendications**

1. Arbre d'entraînement, notamment arbre articulé pour vehicules a moteur, comportant un tube (2) en matière synthétique durcie comme matrice de fibres ou assemblages de fibres à haute résistance insérés dans ce tube en plusieurs couches d'enroulement disposées de façon particulière, et de pièces d'extrémité (5) en métal fixées à demeure dans le dit tube, comportant chacune un prolongement de manchon (4) entouré du tronçon d'extrémité correspondant du tube et, faisant saillie de ce prolongement de manchon, un tronçon en forme d'une partie annulaire (3) de même diamètre extérieur et de même largeure intérieure que le tube et ressortant seule de celui-ci, partie annulaire à la surface frontale intérieure de laquelle les fibres ou assemblages de fibres insérés dans la matrièce de matière synthétique sont solidement liés, de telle sorte que chaque partie annulaire sert en même temps de limitation et fermeture terminale, protégeant la surface frontale sensible du tube, des couches de fibres en matière synthétique, l'arbre d'entraînement caractérisé en ce que:

a) un certain nombre de chevilles d'ancrage (18) faisant saillie vers l'extérieur sont disposées selon une répartition uniforme en direction périphérique sur le prolongement de manchon (4) de chaque pièce d'extrémité (5) à proximité du passage à sa partie annulaire (3);

b) les chevilles d'ancrage (18) sont disposées en position oblique inclinée contre l'extrémité de l'arbre,

c) les chevilles d'ancrage (18) sont insérées dans les pièces d'extrémité (5) sur la surface de flanc intérieure de la gorge annulaire (14), constituée dans la zone du passage de la partie annulaire (3) au prolongement de manchon (4) par exemple sont enfichées dans des alésages borgnes ou enfoncees par rotation dans des alésages taraudés.

2. Arbre d'entrainement selon la revendication 1, caractérisé en ce que pour des pièces d'extrémité (5) préfabriquées au diamètre de leur alésage, correspondant au mandrin d'enroulement, compris entre 60 et 80 mm, sont prévues au moins vingt-quatre, de préférence, trente deux chevilles d'ancrage (18).

3). Arbre d'entraînement selon la revendication 1 ou 2, caractérisé en ce que le prolongement de manchon (4) est constitué selon un profil de section transversale (19) s'élargissant par une cambrure annulaire (21) correspondant à peu près au diamètre de la partie annulaire (3) et ensuite se rétrécissant en direction de l'intérieur de l'arbre jusqu'à une valeur zéro, profil dont la surface supérieure ainsi que, au moins en partie, celle de la partie annulaire (3) est cannelée.

FIG.1

FIG.2

0 044 380

FIG.3

FIG.4